# EUROPEAN PATENT SPECIFICATION

(11) **EP 4 085 165 B1**
(45) Date of publication and mention of the grant of the patent: **13.12.2023**
(21) Application number: 20842304.6
(22) Date of filing: 18.12.2020
(51) Int. Cl.: D04H 1/4209, D01D 1/02, D01D 5/14, D01F 9/08, D01F 6/50

(54) **POLYCRYSTALLINE ALUMINOSILICATE CERAMIC FILAMENT NONWOVEN MATS, AND METHODS OF MAKING THE SAME**
POLYKRISTALLINE ALUMINOSILIKAT-KERAMIKFASERVLIESMATTEN UND VERFAHREN ZU IHRER HERSTELLUNG
TAPIS NON TISSÉS À BASE DE FILAMENTS DE CÉRAMIQUE D'ALUMINOSILICATE POLYCRISTALLIN, ET PROCÉDÉS DE FABRICATION ASSOCIÉS

(30) Priority: 30.12.2019 US 201962955252 P
(43) Date of publication of application: 09.11.2022
(73) Proprietor: 3M Innovative Properties Company, Saint Paul, Minnesota 55133-3427 (US)
(72) Inventor: WILSON, David M., Saint Paul, Minnesota 55133-3427 (US); CHIU, William V., Saint Paul, Minnesota 55133-3427 (US)
(74) Representative: Mathys & Squire
(86) International application number: PCT/IB2020/062210
(87) International publication number: WO 2021/137088

(56) References cited:
- WO-A1-2018/093624
- WO-A1-2019/178323
- WO-A1-2019/217658
- US-A1- 2004 156 760

## Description

### BACKGROUND

In processes for producing nonwoven webs using the sol-gel process, chemical precursors are spun and heat-treated to create ceramic filaments.

Fiber making processes may produce either continuous filaments, typically in the form of multi-filament rovings, or non-woven webs. Continuous filaments can be converted into a nonwoven mat by chopping into shorter fiber strands that can be opened into individual fibers before being laid down (e.g., by wet-laying or air-laying) into a uniform mat. Non-woven ceramic fiber mats or webs also may be produced directly using a fiber blowing process, which is also called the blown microfilament (BMF) process. In fiber blowing processes, an initially low viscosity ceramic precursor dispersion or sol is pumped through a nozzle before it is stretched and fibrillated using high speed air flow streams to form discrete fibers or filaments, which are subsequently collected to form a nonwoven green (unfired) fiber mat or web. The unfired fiber mat is subsequently fired at elevated temperature to form a nonwoven ceramic filament mat.

WO 2018/093624 A1 and WO 2019/217658 A1 describe nonwoven mats comprising polycrystalline, aluminosilicate ceramic filaments comprising a specific amount of crystalline mullite and each having an average diameter preferably equal to 3 µm or more. The mats are produced by spinning an aqueous sol into filaments which are then drawn using a high velocity air stream and fired.

### SUMMARY

In one aspect, the present disclosure is directed to a nonwoven article that includes a plurality of polycrystalline, aluminosilicate ceramic filaments entangled to form a cohesive nonwoven mat. Each of the aluminosilicate ceramic filaments in the mat has an average diameter of less than 2 microns (µm), and the aluminosilicate ceramic filaments include an average of about 15 wt% to about 80 wt% crystalline mullite.

In another aspect, the present disclosure is directed to a method of making a nonwoven web. The method includes flowing an aqueous ceramic precursor sol through at least one orifice to produce at least one substantially continuous filament. The aqueous ceramic precursor sol includes silica particles, water, and a hydrolysable aluminum-containing compound. The filaments are attenuated with a high velocity air stream to draw the filaments to an average diameter not less than or equal to 10 micrometers (µm), and at least a portion of the water is removed from the at least one substantially continuous filament to at least partially dry the at least one substantially continuous filament. The at least partially dried filaments are collected as a green nonwoven web on a collector surface, and the green nonwoven web is heated at a temperature and for a time sufficient to convert the green nonwoven web to a cohesive mat. The cohesive mat includes at least one polycrystalline, aluminosilicate ceramic filament including about 15 wt% to about 80 wt% crystalline mullite, wherein each of the aluminosilicate ceramic filaments in the cohesive mat has an average diameter of less than 2 microns (µm).

These inventions and other unexpected results and advantages are within the scope of the following illustrative detailed description and Examples.

### BRIEF DESCRIPTION OF THE DRAWINGS

The present disclosure may be more completely understood in consideration of the following detailed description of various embodiments of the disclosure in connection with the accompanying figures, in which:
FIG. 1 is a cross sectional view of a mounting mat reinforced in accordance with one embodiment of the present disclosure;
FIG. 2 is a perspective view of an opened pollution control device comprising a reinforced mounting mat, according to embodiments of the present disclosure, with portions of the mat removed so as to more clearly see the aluminosilicate ceramic filaments;
FIG. 3 is a schematic diagram of a blown melt fiber (BMF) apparatus used in the working examples of this application.
FIG. 4 is a scanning electron microscope (SEM) photograph at 5000X of the filaments of Sample 2 of Example 1.
FIG. 5 is a plot of the green diameter of filament samples 3-6 of Example 3A at 15 psi sol pressure at die air flow rates increasing from 15-30 cfm.
FIG. 6 is a photograph of a nonwoven mat made from the filaments of Sample 7 of Example 3B in a flat (left) and a folded (right) condition.
FIG. 7 is a plot showing the development of crystalline mullite as a function of heat treatment temperature for Sample 7 of Example 3B.

In the drawings, like reference numerals indicate like elements. While the above-identified drawing, which may not be drawn to scale, sets forth various embodiments of the present disclosure, other embodiments are also contemplated, as noted in the Detailed Description. In all cases, this disclosure describes the presently disclosed disclosure by way of representation of exemplary embodiments and not by express limitations. It should be understood that numerous other modifications and embodiments can be devised by those skilled in the art, which fall within the scope of this disclosure.

### DETAILED DESCRIPTION

For the following Glossary of defined terms, these definitions shall be applied for the entire application, unless a different definition is provided in the claims or elsewhere in the specification.

### Glossary

Certain terms are used throughout the description and the claims that, while for the most part are well known, may require some explanation. It should understood that:

The term "adjoining" with reference to a particular layer means joined with or attached to another layer, in a position wherein the two layers are either next to (i.e., adjacent to) and directly contacting each other, or contiguous with each other but not in direct contact (i.e., there are one or more additional layers intervening between the layers).

By using terms of orientation such as "atop", "on", "over," "covering", "uppermost", "underlying" and the like for the location of various elements in the disclosed coated articles, we refer to the relative position of an element with respect to a horizontally-disposed, upwardly-facing substrate. However, unless otherwise indicated, it is not intended that the substrate or articles should have any particular orientation in space during or after manufacture.

The terms "(co)polymer" or "(co)polymers" includes homopolymers and copolymers, as well as homopolymers or copolymers that may be formed in a miscible blend, e.g., by coextrusion or by reaction, including, e.g., transesterification. The term "copolymer" includes random, block and star (e.g. dendritic) copolymers.

By using the term "separated by" to describe the position of a layer with respect to other layers, we refer to the layer as being positioned between two other layers but not necessarily contiguous to or adjacent to either layer.

The terms "about" or "approximately" with reference to a numerical value or a shape means +/- five percent of the numerical value or property or characteristic, but expressly includes the exact numerical value. For example, a viscosity of "about" 1 Pa-sec refers to a viscosity from 0.95 to 1.05 Pa-sec, but also expressly includes a viscosity of exactly 1 Pa-sec. Similarly, a perimeter that is "substantially square" is intended to describe a geometric shape having four lateral edges in which each lateral edge has a length which is from 95% to 105% of the length of any other lateral edge, but which also includes a geometric shape in which each lateral edge has exactly the same length.

The term "Web basis weight" is calculated from the weight of a 10 cm x 10 cm web sample.

The term "Web thickness" is measured on a using a thickness testing gauge available from Testing Machines, Inc. (Amityville, NY) under the trade designation Model 49-70, which has a tester foot with ½ inch (12.7 mm) diameter.

The term "Bulk density" is the mass per unit volume of the bulk ceramic material that makes up the web, taken from the literature.

The term "substantially" with reference to a property or characteristic means that the property or characteristic is exhibited to a greater extent than the opposite of that property or characteristic is exhibited. For example, a substrate that is "substantially" transparent refers to a substrate that transmits more radiation (e.g. visible light) than it fails to transmit (e.g. absorbs and reflects). Thus, a substrate that transmits more than 50% of the visible light incident upon its surface is substantially transparent, but a substrate that transmits 50% or less of the visible light incident upon its surface is not substantially transparent.

As used in this specification and the appended embodiments, the singular forms "a", "an", and "the" include plural referents unless the content clearly dictates otherwise. Thus, for example, reference to fine filaments containing "a compound" includes a mixture of two or more compounds. As used in this specification and the appended embodiments, the term "or" is generally employed in its sense including "and/or" unless the content clearly dictates otherwise.

As used in this specification, the recitation of numerical ranges by endpoints includes all numbers subsumed within that range (e.g. 1 to 5 includes 1, 1.5, 2, 2.75, 3, 3.8, 4, and 5).

Unless otherwise indicated, all numbers expressing quantities or ingredients, measurement of properties and so forth used in the specification and embodiments are to be understood as being modified in all instances by the term "about." Accordingly, unless indicated to the contrary, the numerical parameters set forth in the foregoing specification and attached listing of embodiments can vary depending upon the desired properties sought to be obtained by those skilled in the art utilizing the teachings of the present disclosure. At the very least, and not as an attempt to limit the application of the doctrine of equivalents to the scope of the claimed embodiments, each numerical parameter should at least be construed in light of the number of reported significant digits and by applying ordinary rounding techniques.

Exemplary embodiments of the present disclosure may take on various modifications and alterations without departing from the scope of the present disclosure. Accordingly, it is to be understood that the embodiments of the present disclosure are not to be limited to the following described exemplary embodiments, but is to be controlled by the limitations set forth in the claims and any equivalents thereof.

Various exemplary embodiments of the disclosure will now be described with particular reference to the Drawings. Exemplary embodiments of the present disclosure may take on various modifications and alterations without departing from the spirit and scope of the disclosure. Accordingly, it is to be understood that the embodiments of the present disclosure are not to be limited to the following described exemplary embodiments, but are to be controlled by the limitations set forth in the claims.

The sol-gel BMF process produces filaments with a limited range of diameters. Attempting to make filaments with diameters that are too small leads to unstable processes which break filaments, creates short fibers, generally spherical bodies referred to as shot, and creates wide filament diameter variations. Attempting to make filaments that are too large in diameter also destabilizes filament formation, which can lower the strength, flexibility, and handleability of the non-woven mats made from the filaments.

Alumina-silica filaments are typically manufactured with a low crystalline mullite (3Al₂O₃-2SiO₂) content. When the filaments are heat treated at temperatures above 1200 °C where mullite crystallizes, non-woven strength and flexibility can be greatly diminished. This lack of strength and flexibility can prevent the filaments from being used at high temperatures, and also prevents the favorable properties of mullite, including thermal stability, creep resistance, chemical stability from being achieved.

Polycrystalline aluminosilicate ceramic filaments with an increased crystalline mullite content, and nonwoven webs and mats incorporating the filaments, have excellent high temperature resistance up to 1300 °C, excellent acid resistance, low pressure drop when used in filtration applications, and good flexibility. Smaller diameter filaments can have even greater softness and flexibility, lower thermal conductivity in mat form, and potentially improved mechanical properties when used as a structural element in a fiber-reinforced composite. When incorporated into a nonwoven mat, polycrystalline aluminosilicate ceramic filaments with a small diameter and higher mullite content can have a wide variety of potential applications including, for example, filtration, support media, backing media, thermal insulation such as, for example, electrical vehicle battery insulation, and high temperature acoustic insulation.

In general, the present disclosure is directed to flexible polycrystalline, aluminosilicate ceramic filaments with an average diameter of less than 2 microns (µm) and an average crystalline mullite (3Al₂O₃-2SiO₂) composition of at about 15 wt% to about 80 wt%, which are collected to form a cohesive nonwoven web. These filaments can be more economically produced using the blown melt fiber (BMF) process, compared to filaments produced using conventional electrospinning processes. The combination of a small diameter of less than 2 µm and a high mullite content provides a ceramic filament with excellent heat resistance, as well as softness, flexibility, durability, and resistance to breakage, and in some embodiments can also have improved thermomechanical properties (e.g., resistance to thermal creep at elevated temperatures).

A multiplicity of the small diameter, high mullite content filaments may be collected and incorporated into a green nonwoven web, which can subsequently be fired to make a cohesive ceramic mat. In some examples, which are not intended to be limiting, the ceramic mats can be used in filtration, thermal insulation, acoustic insulation, fire protection, as a mounting mat, as a gasket or a catalyst support, can be incorporated into a fiber reinforced composite as a structural element, or can be incorporated into a pollution control device such as a catalytic converter for a vehicle.

In a further aspect, the present disclosure describes a method of making a nonwoven web of the small diameter, high mullite content filaments. The method includes the steps of flowing an aqueous ceramic precursor sol through at least one orifice to produce at least one substantially continuous filament. The aqueous ceramic precursor sol includes silica particles dispersed in water, and a hydrolysable aluminum-containing compound. The filaments are at least partially dried and collected on a collector surface to form a green nonwoven web on the collector surface. The green nonwoven web may then be fired to form a cohesive ceramic mat.

### Polycrystalline Aluminosilicate Ceramic Nonwoven Articles

In one aspect, the present disclosure is directed to a nonwoven article, which includes a plurality of polycrystalline, aluminosilicate ceramic filaments that can be collected and entangled to form a cohesive nonwoven mat. The aluminosilicate ceramic filaments incorporated into the nonwoven article have an average diameter of less than about 2 microns (µm) as measured using electron microscopy, and an average crystalline mullite (3Al₂O₃-2SiO₂) content of at least 15 wt %, or at least 20 wt%, or at least 30 wt%, or at least 40 wt%, or at least 50 wt%, or at least 60 wt%, or at least 70 wt%, or at least 72 wt%, or at least 75 wt%, or at least 80 wt%.

In some example embodiments, which are not intended to be limiting, the ceramic filaments include about 70 wt% to about 90 wt% alumina, or about 73 wt% to about 80 wt% alumina.

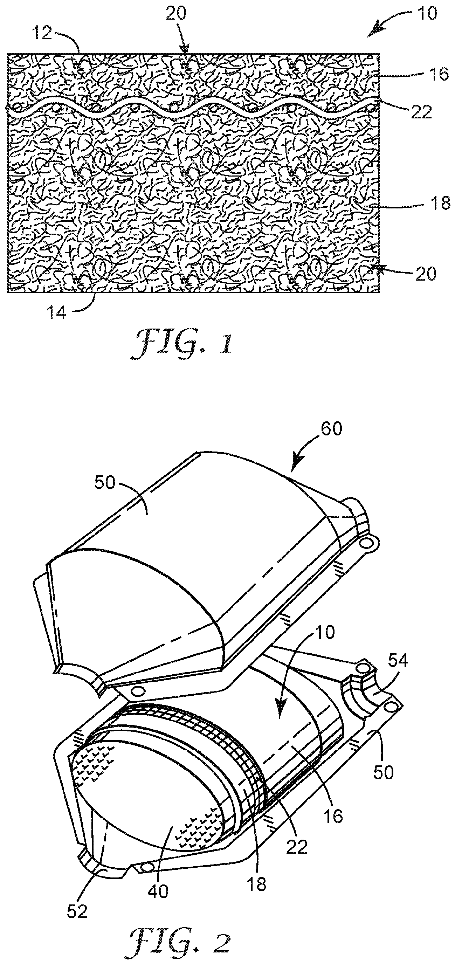

Referring now to FIG. 1, a reinforced nonwoven web or mat 10 according to embodiments of the present disclosure has a first major surface 12, a second major surface 14 and a thickness (*i.e.,* the distance between surfaces 12 and 14). The nonwoven web or mat 10 has at least a first layer 16 and optionally a second layer 18, and may include one or more additional layers (not shown in FIG. 1). At least one of the mat layer 16 and optional mat layer 18, may include at least a portion of the substantially continuous, polycrystalline, aluminosilicate ceramic filaments 20 having an average diameter of less than 2 µm and an average mullite content of about 15 wt% to about 80 wt%.

In some exemplary embodiments, the polycrystalline, aluminosilicate ceramic filaments 20 may be incorporated into the nonwoven mat 10 in conjunction with other filaments or fibers. Thus, in certain exemplary embodiments, the reinforced mat 10 may include other filaments or fibers selected from alumina fibers, silica fibers, silicon carbide fibers, silicon nitride fibers, carbon fibers, glass fibers, metal fibers, alumina-phosphorous pentoxide fibers, alumina-boria-silica fibers, zirconia fibers, zirconia-alumina fibers, zirconia-silica fibers, and mixtures or combinations thereof. In some embodiments, the nonwoven mat 10 can optionally include non-fiber fillers such as aerogel or glass/ceramic bubbles, and the like.

In further exemplary embodiments, the polycrystalline aluminosilicate ceramic filaments 20 may be used in conjunction with other optional performance enhancing materials (e.g., intumescent materials or inserts, a non-intumescent insert, support meshes, binders, and the like). As shown in the example embodiment of a vehicular catalytic converter housing shown in FIG. 2, an optional reinforcing mesh 22 is shown disposed between layer 16 and optional layer 18 so as to be generally co-planer with the first major surface 12 and the second major surface 14.

Suitable optional performance enhancing materials are described, for example, in U.S. Pat. Nos. 3,001,571 and 3,916,057 (Hatch et al.); 4,305,992, 4,385,135, 5,254,416 (Langer et al.); 5,242,871 (Hashimoto et al.); 5,380,580 (Rogers et al.); 7,261,864 B2 (Watanabe); 5,385,873 and 5,207,989 (MacNeil); and Pub. PCT App. WO 97/48889 (Sanocki et al.).

In certain exemplary embodiments, the nonwoven web or mat 10 further includes an optional binder to bond together the plurality of polycrystalline, aluminosilicate ceramic filaments. A wide variety of suitable binders may be used, including an inorganic binder, an organic binder, and combinations thereof. For example, a suitable organic binder is selected from a (meth)acrylic (co)polymer, poly(vinyl) alcohol, poly (vinyl) pyrrolidone, poly(ethylene oxide, poly(vinyl) acetate, polyolefin, polyester, and combinations thereof. In other embodiments, an inorganic binder may be selected from silica, alumina, zirconia, kaolin clay, bentonite clay, silicate, micaceous particles, and combinations thereof. In some embodiments, the optional binder is substantially free of silicone materials.

The polycrystalline aluminosilicate ceramic filaments having a diameter of less than 2 µm and a mullite content of about 15 wt% to about 80 wt% described herein provide a nonwoven mat with excellent flexibility. In one embodiment discussed in detail in the working examples below, which is not intended to be limiting, a circular nonwoven mat made from the filaments and having a diameter of about 1.5 inches to 2 inches (3.8 cm to 5 cm) was folded on itself along a diameter to form a semicircle with two overlying layers. The semicircle was then folded again on itself along a radius of the semicircle to form a half-semicircle (sometimes referred to as a quadrant) including four overlying layers. Following the multiple folding steps, the individual filaments forming the mat remained unbroken, and the half-semicircle remained folded, even after an extended time period.

The ability of mats to withstand repeated flexure can also be determined using a flexural endurance tester as set forth in ASTM D2176. As shown in detail in the working examples below, mats made with small diameter filaments having greater than about 60 wt% crystalline mullite had flex endurance of 18-140 double cycles under 100g load, and endured more than 2000 cycles at zero tensile load without breaking.

### Polycrystalline, Aluminosilicate Ceramic Filaments

In some exemplary embodiments of the foregoing nonwoven articles, each of the plurality of polycrystalline, aluminosilicate ceramic filaments exhibits a green diameter of about 1 µm to about 10 µm, or about 2 µm to about 5 µm, and the filaments as-fired have an average diameter of about 1 µm to less than 2 µm, as determined using the Filament Diameter Measurement Procedure with electron microscopy, as described further below.

In further exemplary embodiments, the polycrystalline aluminosilicate ceramic filaments have a length of at least 3 mm, 4 mm, 5 mm, 6 mm, 7, mm, 8 mm, 9 mm, or even 10 mm or longer. In some such exemplary embodiments, each of the polycrystalline aluminosilicate ceramic filaments is substantially continuous, which in this application means that the filaments, while having opposing ends or termination points, nevertheless behave as continuous filaments with respect to their processing characteristics and handleability. Substantially continuous filaments typically have a length greater than 25 mm, 50 mm, 75 mm, 100 mm, 250 mm, 500 mm, 750 mm, or even longer, and have an infinite length, or a length less than 10,000 mm, 7,500 mm, 5,000 mm, 2,500 mm, 1,000 mm, or even 900 mm. Thus, in certain exemplary embodiments, the plurality of polycrystalline, aluminosilicate ceramic filaments may have lengths of from 25 mm to an infinite length, or about 50 mm to about 10,000 mm, or about 100 mm to about 7500 mm, or about 250 mm to about 5000 mm, or even 500 mm to about 2500 mm.

In further exemplary embodiments, the bulk density of the cohesive mat may range from 0.05 to 0.3 g/cm³, 0.06 to 0.25 g/cm³, or even 0.07 to 0.2 g/cm³.

In some exemplary embodiments, the thickness of the nonwoven web and/or cohesive mat is at least 0.5 mm, 1 mm, 2 mm, 2.5 mm, 5 mm, 7.5 mm, 10 mm, 20 mm, 30 mm, 40 mm, or even 50 mm, or more. In some such exemplary embodiments, the thickness of the nonwoven web and/or cohesive mat is at most 100 mm, 90 mm, 80 mm, 70 mm, or even 60 mm or less.

In additional exemplary embodiments, the basis weight of the nonwoven web and/or cohesive mat is at least 50 g/m² (gsm), 60 gsm, 70 gsm, 80 gsm, 90 gsm, 100 gsm, or even higher. In some such exemplary embodiments, the basis weight is no more than 4,000 gsm, 3,000 gsm, 2,000 gsm, 1,000 gsm, 750 gsm, 500 gsm, 250 gsm, or even lower. In some exemplary embodiments, the polycrystalline aluminosilicate ceramic filaments have an alumina to silica ratio in the range of 60:40 to 90: 10 by weight, 70:30 to 80:20 by weight, 73:27 to 78:22 by weight, or even 75:25 to 77:23 by weight.

### Articles Including Polycrystalline, Aluminosilicate Ceramic Nonwoven Mats

In another aspect, the present disclosure describes an article including the foregoing nonwoven aluminosilicate cohesive ceramic web having a multiplicity of polycrystalline, aluminosilicate ceramic filaments with an average diameter of less than 2 µm and an average mullite content of about 15 wt% to about 80 wt%. In some such embodiments, the article may be selected from a filtration article, a thermal insulation article, an acoustic insulation article, a fire protection article, a mounting mat article, a gasket article, a catalyst support article, a component of a ceramic article, a battery thermal barrier and combinations thereof.

Referring again to FIG. 2, a pollution control device 60 (e.g., a catalytic converter and/or an exhaust filter), according to the present disclosure, can include a housing 50, a pollution control element 40 (e.g., a catalytic element and/or filter) mounted inside of the housing 50, and a mounting mat 10 like those described herein sandwiched between so as to mount the element 40 within the housing 50. The housing 50 is typically made of a metal such as, for example stainless steel, and includes an inlet 52 and an outlet 54 to allow exhaust gases from an internal combustion engine to pass through the device 60. The element 40 is typically a thin walled monolithic structure that is relatively fragile. The mat 10 provides protection for the element 40 from both thermal and mechanical (e.g., vibrational) related damage.

It can be desirable for an optional mesh 22 to be positioned close to the surface 12 of the mat 10 (i.e., for the layer 16 to be relatively thinner than the layer 18). For example, with a mat 10 having a total weight of about 1600 g/m², and the netting 22 having a weight in the range of from about 80 to about 160 g/m², it can be desirable for the layer 16 to have a weight in the range of from about 40 to about 800 g/m². Put another way, it can be desirable for the layer 16 to make up about 3% to 10% of the total weight of the mat 10.

Thus, in some exemplary embodiments, the pollution control device further includes an intumescent layer, a reinforcing mesh, a non-intumescent insert, or a combination thereof. Suitable intumescent layers, reinforcing meshes, and non-intumescent inserts are described, for example, in U.S. Pat. Nos. 3,001,571 and 3,916,057 (Hatch et al.); 4,305,992, 4,385,135, 5,254,416 (Langer et al.); 5,242,871 (Hashimoto et al.); 5,380,580 (Rogers et al.); 7,261,864 B2 (Watanabe); 5,385,873 and 5,207,989 (MacNeil); and Pub. PCT App. WO 97/48889 (Sanocki et al.).

In some such exemplary embodiments, the pollution control device may be installed in a motor vehicle exhaust system of a motor vehicle selected from an automobile, a motorcycle, a truck, a boat, a submersible, or an aircraft.

### Methods of Making Polycrystalline Ceramic Filaments and Nonwoven Mats

In another aspect, the disclosure describes a method of making a nonwoven web including polycrystalline aluminosilicate ceramic filaments that can be fired to form a cohesive mat with at least some filaments having an average diameter of less than 2 µm and an average crystalline mullite content of greater than about 50 wt%.

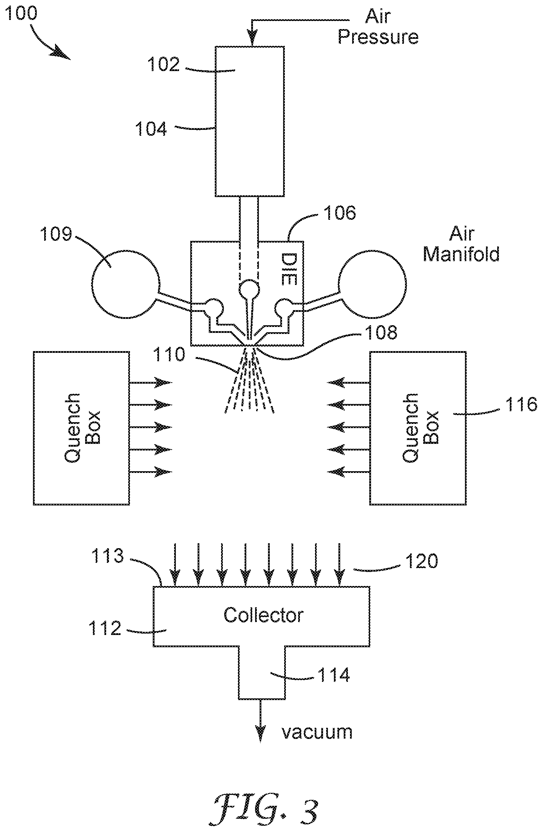

In general, as shown schematically in the diagram of the blown microfiber (BMF) apparatus 100 of FIG. 3, the filaments are made by flowing an aqueous ceramic precursor sol 102 stored in a sol reservoir 104 through at least one orifice 108 in a die 106 with the assistance of surrounding high pressure attenuation air 109. This apparatus can also be called a melt blowing or blow spinning die. The apparatus may consist of a linear array of round holes in a V-shaped die, with air injected at an angle to the sol extrusion direction, as in, for example US 3825380, or an array of nozzles with attenuation air surrounding them, as in, for example, US 5476616 and US 5286182.

The aqueous ceramic precursor sol 102 includes silica particles dispersed in water. Suitable alumina and silica sols are described, for example, in WO201893624A1 to DeRovere. The aqueous ceramic precursor sol further includes a hydrolysable aluminum-containing compound, which can have less than the stoichiometric 3 moles of anion per Al, and has the nominal formula AlXₙ(OH)₃₋ₙ, where X is a ligand such as Cl-, NO₃-, or CH₃COOH-, and is capable of forming clear aqueous solutions. These solutions can be formed using a number of methods, including dissolution of aluminum metal in salt solutions, dissolution of aluminum hydroxides in acid, hydrolysis of alkoxides, and neutralization of acidic salt solutions. In some embodiments, soluble aluminum compounds used for making filaments contain about 0.5 to about 2 moles of anion ligand per mole of aluminum. In certain embodiments, the aqueous ceramic precursor sol includes aluminum chlorohydrate and dispersed silica particles.

Optionally, the aqueous ceramic precursor sol further includes at least one of a water soluble (co)polymer and a defoamer. Any suitable water soluble (co)polymer may be used. However, poly(vinyl) alcohol (PVA), poly(vinyl) alcohol-co-poly(vinyl) acetate copolymers, poly(vinyl) pyrrolidone, poly(ethylene oxide), and poly(ethylene oxide)-co-(propylene oxide) copolymers, have been found to be particularly suitable. Any suitable defoamer may be used. In some embodiments, when medium degrees of hydrolysis (e.g., 50-90% poly(vinyl) acetate) poly(vinyl) alcohol-co-poly(vinyl) acetate copolymers are used, defoamers based on long chain alcohols like 1-octanol, and polyol esters such as the FOAM-A-TAC series of antifoams available from Enterprise Specialty Products Inc. (Laurens, SC), for example, FOAM-A-TAC 402, 407, and 425.

In some embodiments, which are not intended to be limiting the aqueous ceramic precursor sol 102 has a viscosity of about 2000 centipoise (cP) to about 10,000 cP, (2 Pa-sec to 10 Pa-sec) or about 3000 cP to about 5000 cP (3 Pa-sec to 5 Pa-sec).

In some embodiments, which are not intended to be limiting, the aqueous ceramic precursor sol 102 is supplied at a pressure of about 2 psi to about 20 psi, or about 3 psi to about 15 psi (14 Pa to 103 Pa), or at about 5 psi to about 10 psi (34 Pa to 69 Pa). Higher pressures increase sol flow rate per orifice, and in some embodiments higher pressures may also increase filament diameter.

In some such exemplary methods, the at least one orifice 108 includes a plurality of circular orifices positioned in a multi-orifice die 106 in flow communication with a source of the aqueous ceramic precursor sol 102. Optionally, each of the plurality of orifices has an internal diameter of from 50 to 500 µm, 100 to 400 µm, 125 to 200 µm, or about 150 µm.

The method further includes directing a stream of high velocity gas proximate the filaments to at least partially dry and attenuate the filaments. It is often desired to humidify the attenuation air to prevent drying and enable increased stretching and elongation of the extruded filaments. In some embodiments, the gas is at room temperature. In some embodiments, the gas is heated to a temperature of at least 50 °C, 75 °C, 100 °C, 125 °C, 150 °C, or even higher temperature. In various embodiments, which are not intended to be limiting, to stretch the filaments, the velocity of the attenuation air can be very high, 10,000 feet per minute (fpm) (51 m/sec) or even higher, e.g. 15,000 (76 m/sec), 20,000 (102 m/sec) or even 30,000 fpm (152 m/sec). Higher air flow velocity will create more stretching force and can reduce filament diameter more than with lower air velocity. However, if the stretching force is too high, the filaments break and do not form small diameter filaments. In some situations, the sol-gel liquid spheroidizes due to surface tension to form short fibers, "shot" or roughly equiaxed particles rather than filaments. High air flow velocity may also cause turbulence, which, while not wishing to be bound by theory, can create variable air velocity and therefore variable stretching force on the extruded filaments, which in turn causes a large diameter variability, which can be undesirable. Turbulence may also break filaments, which can lead not only to shot particles, but high diameter variability.

The filaments 110 emerging from the orifice 108 are quenched with warmer air in a quench box 116 to at least partially solidify the filaments. The warmer air is heated to a temperature of at least 50 °C, 75 °C, 100 °C, 125 °C, 150 °C, or even more to dry and solidify the filaments. The at least partially solidified filaments are then deposited on a surface 113 of a collector 112 and entangled to form a green nonwoven web 120 with assistance of a vacuum 114. In some embodiments, the volume of air drawn into the collector is much higher than that of the blowing air. This ensures capture of all extruded filaments, and also entrains room air, which can further dry the nonwoven web 120.

Firing of green filaments can be considered to include two distinct steps. The first is a lower temperature pre-fire (burnout) segment in which organics are removed and inorganic phases begin to form. The second is a high temperature crystallization and sintering segment where the filaments densify and high temperature crystalline phases form. The two segments can be performed separately (e.g., a pre-fire followed by cooling to room temperature before sintering) or sequentially in a continuous process (e.g., a pre-fire followed immediately by sintering without allowing the material to cool).

Mullite (3Al₂O₃-2SiO₂) is the only thermodynamically stable crystal in the alumina-silica phase diagram. Thus, mullite will crystallize in sol-gel alumina-silica filaments during heat treatment at some elevated temperature and time. In some cases, often called monophasic gels, in which alumina and silica are mixed at near-atomic level, mullite crystallizes at relatively low temperatures, between 900 °C and 1100 °C, for instance 980 °C In other cases, often called diphasic gels consisting of discrete particles or regions of alumina or silica typically 10 nm to 1000 nm, the crystallization temperature is higher, for instance 1200 °C to 1400 °C or even higher. During heat treatment of diphasic gels, other phases such as transition aluminas (e.g., gamma, eta, theta, delta aluminas) may form at intermediate temperatures, commonly between 600 °C and 1000 °C, and most commonly between 800 °C and 900 °C.

The crystallization of sol-gel ceramic filaments to mullite often occurs over a range of temperatures, e.g. 1200 °C to 1400 °C. In other words, the nucleation and growth rate of mullite crystals is kinetically slow. Furthermore, the volumetric nucleation rate of mullite is relatively low, which leads to large grains of mullite in the filament, for instance 0.2 µm to 0.5 µm or even larger. In filaments with diameters below 10 µm, and especially below 2 µm, it is important to maintain small grain size, preferably below 0.25 µm and more preferably below 0.2 µm or even below 0.1 µm in diameter. Filaments with larger grains have lower strength and flexibility, and in various embodiments the filaments of the present disclosure can have grain sizes below 0.5 µm , or below 0.3 µm, and even below 0.1 µm.

To quantify the degree of conversion of the filaments to mullite, XRD powder diffraction may be used, and in some cases determining the degree of conversion is not straightforward. Mullite crystallizes from a mixture of amorphous or partially amorphous alumina and silica phases, which do not diffract x-rays. Because of this, comparing the ratio of mullite to other phases present in the filament is not a good measure of the volume fraction of mullite in the filaments. Therefore, determining the amount of mullite in filaments is best done by comparing the size of a mullite XRD peak, e.g. at 15° or 26° 2θ, of the tested sample is compared to a reference sample or samples. As an example, a filament fired at 1500 °C for 1 hour may be considered to be 100% converted to mullite, and the size of the peak in an unknown sample may be compared with the size of the same XRD peak in the 1500 °C sample.

In one embodiment (not shown in FIG. 3), the green nonwoven web 120 is heated (e.g., fired) at a temperature and for a time sufficient to convert the nonwoven web to a cohesive mat having incorporated therein polycrystalline, aluminosilicate ceramic filaments having an average mullite percent of about 15 wt% to about 80 wt%. In general, the green nonwoven web 120 should be heated to a firing temperature of at least 1,000 °C, 1,250 °C, 1,500 °C, or even higher temperature. Higher firing temperatures may result in shorter firing times, and conversely, longer firing times may permit use of lower firing temperatures. In general, the firing time should be at least 30 minutes, 1 hour, 2 hours, 4 hours, 5 hours, 7.5 hours, 10 hours, or even longer. In general, the firing time should be less than 24 hours, less than 20 hours, less than 15 hours, less than 12 hours, or even 10 hours. Suitable firing furnaces (i.e., kilns) are well known to those skilled in the art, for example, the continuous kilns manufactured by HED International, Inc. (Ringoes, NJ).

### Optional Processing Steps

Certain optional processing steps may be found advantageous in practicing various exemplary embodiments of the present disclosure. For example, the cohesive ceramic mats may be subjected to at least one of needle-punching, stitch-bonding, hydro-entangling, binder impregnation, and chopping of the cohesive mat into discrete fibers.

Thus, in one currently contemplated exemplary embodiment, the cohesive mat may be chopped to produce a plurality of discrete, polycrystalline, aluminosilicate ceramic fibers, each having an average diameter of less than about 2 microns and a mullite content of at least 15 wt% and up to 80 wt%. The resulting chopped fibers may then be further processed, for example, using at least one of wet-laying or air-laying, to form a fibrous ceramic mat including discrete aluminosilicate ceramic fibers.

Embodiments of fibrous nonwoven mounting mats described herein can be made, for example, by feeding chopped, individualized fibers (e.g., about 2.5 cm to about 5 cm in length) into a lickerin roll equipped with pins such as that available from Laroche (Cours la ville, France) and/or conventional web-forming machines commercially available, for example, under the trade designation "RANDO WEBBER" from Rando Machine Corp. (Macedon, N.Y); "DAN WEB" from ScanWeb Co. (Denmark), wherein the fibers are drawn onto a wire screen or mesh belt (e.g., a metal or nylon belt). If a "DAN WEB"-type web-forming machine is used, the fibers are preferably individualized using a hammer mill and then a blower. To facilitate ease of handling of the mat, the mat can be formed on or placed on a scrim.

Embodiments of fibrous nonwoven mounting mats described herein can be also made, for example, using conventional wet-forming or textile carding. For wet forming processes, the fiber length is often from about 0.5 cm to about 6 cm.

In some exemplary embodiments, particularly with wet forming processes, a binder may be advantageously used to facilitate formation of the mat. In some embodiments, nonwoven mats described herein comprise not greater than 10 (in some embodiments not greater than 4, 3, 2, 1, 0.75, 0.5, 0.25, or even not greater than 0.1) percent by weight binder, based on the total weight of the mat, while others contain no binder.

Optionally, some embodiments of fibrous nonwoven mounting mat described herein are needle-punched (i.e., where there is physical entanglement of fibers provided by multiple full or partial (in some embodiments, full) penetration of the mat, for example, by barbed needles). The nonwoven mat can be needle punched using a conventional needle punching apparatus (e.g., a needle puncher commercially available, for example, under the trade designation "DILO" from Dilo Gmbh (Germany), with barbed needles commercially available, for example, from Foster Needle Company, Inc. (Manitowoc, WI) or Groz-Beckert Group (Germany), to provide a needle-punched, nonwoven mat.

Needle punching, which provides entanglement of the fibers, typically involves compressing the mat and then punching and drawing barbed needles through the mat. The efficacy of the physical entanglement of the fibers during needle punching is generally improved when the polymeric and/or bi-component organic fibers previously mentioned are included in the mat construction. The improved entanglement can further increase tensile strength and improve handling of the nonwoven mat. The optimum number of needle punches per area of mat will vary depending on the particular application.

Typically, the nonwoven mat is needle punched to provide about 5 to about 60 needle punches/cm² (in some embodiments, about 10 to about 20 needle punches/cm². Optionally, some embodiments of mounting mat described herein are stitchbonded using conventional techniques (see e.g., U.S. Pat. No. 4,181,514 (Lefkowitz et al.). Typically, the mat is stitchbonded with organic thread. A thin layer of an organic or inorganic sheet material can be placed on either or both sides of the mat during stitchbonding to prevent or minimize the threads from cutting through the mat. If it is desirable for the stitching thread to not decompose in use, an inorganic thread, (e.g., ceramic or metal (such as stainless steel) can be used. The spacing of the stitches is usually about 3 mm to about 30 mm so that the fibers are uniformly compressed throughout the entire area of the mat.

The operation of the present disclosure will be further described with regard to the following detailed examples. These examples are offered to further illustrate the various specific and preferred embodiments and techniques. It should be understood, however, that many variations and modifications may be made while remaining within the scope of the present disclosure.

### EXAMPLES

These Examples are merely for illustrative purposes and are not meant to be overly limiting on the scope of the appended claims. Notwithstanding that the numerical ranges and parameters setting forth the broad scope of the present disclosure are approximations, the numerical values set forth in the specific examples are reported as precisely as possible. Any numerical value, however, inherently contains certain errors necessarily resulting from the standard deviation found in their respective testing measurements. At the very least, each numerical parameter should at least be construed in light of the number of reported significant digits and by applying ordinary rounding techniques.

### Summary of Materials

Unless otherwise noted, all parts, percentages, ratios, etc. in the Examples and the rest of the specification are by weight. Solvents and other reagents used may be obtained from Sigma-Aldrich Chemical Company (Milwaukee, WI) unless otherwise noted. In addition, Table 1 provides abbreviations and a source for all materials used in the Examples below:

**Table 1: Materials**

| **Name** | **Description** | **Source** |
|---|---|---|
| DelPAC XG | Al₂(OH)₅Cl, aluminum chlorohydrate (ACH, 22.17% Al₂O₃) | USALCO, LLC, Baltimore, MD |
| Nalco 1034A | 35.60% Aqueous Colloidal Silica Sol | Nalco Corp., Naperville, IL |
| Selvol 523 | Polyvinyl Alcohol | Sekisui Specialty Chemical, LLC, Dallas, TX |

### Test Methods

The following test methods have been used in evaluating some of the Examples of the present disclosure.

### Mullite Content Measurement Procedure:

Powder x-ray diffraction was used to measure mullite content. Powders were analyzed with a Rigaku MiniFlex 600 diffractometer (Tokyo, Japan) using Cu K_{α} radiation. The mullite content of example materials was determined by measuring the relative peak height of the 26° 2θ mullite and comparing to the same peak after the filaments were fired to 1500 °C for 1 hour. Filaments were considered to be 100% converted to mullite in the latter condition.

### Filament or Fiber Diameter Measurement Procedure:

The diameter of the ceramic filaments was determined using an optical microscope (Kayence VHX Digital Microscope System) which includes analytic software. Samples were prepared by spreading representative samplings of ceramic filaments on doublestick tape attached to a glass slide and measuring the diameters of at least 40 ceramic filaments at 1000X magnification.

Images of fiber mats were also captured using a Scanning Electron (Zeiss EVO MA, Carl Zeiss Microscopy USA, Thomwood, NY).

### Sol-Gel Precursor

Aluminum chlorohydrate (ACH), colloidal silica, DI water, and polyvinyl alcohol (PVA) were mixed together and concentrated by evaporation under vacuum. As noted in Table 1 above, the ACH (DelPAC XG) was sourced from USALCO, LLC, the source of colloidal silica was Nalco 1034A, and the PVA was sourced from Sekisui Selvol 523. The ceramic composition was 76% Alumina and 24% Silica, with 10% PVA (per weight of alumina).

### Green Filament Firing Method:

Firing of green filaments can be considered to comprise two main segments. The first is a lower temperature pre-fire (burnout) segment in which organics are removed and inorganic phases begin to form. The second is a high temperature crystallization and sintering segment where the filaments densify and high temperature crystalline phases form. The two segments can be performed separately (e.g., a pre-fire followed by cooling to room temperature before sintering) or sequentially in a continuous process (e.g., a pre-fire followed immediately by sintering without allow the material to cool).

Filament webs were fired in a continuous roller kiln. The mats were conveyed through the kiln by a flat array of ceramic rollers. Webs were laid on a section of woven Nextel ceramic fiber belt to be conveyed through the kiln.

The roller kiln has a series of heated zones with gradually and progressively increasing temperatures, from room temperature up to a temperature sufficient to crystallize the filaments partially or completely to mullite, which is generally about 1200 °C to about 1350 °C.

During this process, most organic components and chlorine (Cl) are volatilized from the filaments between 250 °C and 600 °C. The rate of temperature increase is controlled, for instance to avoid degradation of the filaments as volatiles are removed and the filament converts to ceramic, shrinks, and crystallizes. It may be desirable to control the volatilization process by introducing air, steam, nitrogen or other gases to the kiln between 200 °C and 700 °C. It is also desirable to exhaust the volatiles produced. In some embodiments, the kiln is also provided with exhaust ports to remove volatiles such as CO₂ and HCl. The exhaust ports also create a negative pressure within the kiln to prevent hazardous or corrosive volatiles from escaping from the kiln.

### Example 1

280 g of concentrated ACH-silica-PVA sol was diluted with 28 g DI H₂O and mixed to dissolve. The ACH-silica sol had a composition 76% Al₂O₃-24% SiO₂ and was made from Aluminum Chlorohydrate (Locron, Inc.), Nalco 1034 silica sol, and polyvinyl alcohol (9 wt% solution of Poval 22-88, a high molecular weight, intermediate hydrolysis level (88-89%) polyvinyl alcohol). The amount of PVA was 10 wt% relative to Al₂O₃. After dilution, the viscosity of the 76:24 sol was 5,000 cP (5 Pa-sec).

Filaments were blown using a 2 inch (5 cm) BMF die with 50 holes each 6 mil (0.15 mm) in diameter. A silicone and fluorochemical release agent was used to avoid wetting by the aqueous sol. Blowing air to the die was humified to 90% RH using injecting water spray into a chamber with heated air. The air was cooled back to room temperature in a water bath. Filaments were blown with die air at 15 cubic feet per minute (cfm) (0.007 m³/sec) into a space between two 12 inch (30 cm) high by 6 inch (15 cm) wide quench boxes with heated 85 °C air at 11 cfm per quench box. The filaments were collected on a vacuum collector screen 30 inch (76 cm) below the blowing die.

The diameter of the as-spun green filaments for each air flow setting is set forth below in Table 2. The relative standard deviation in diameter was 18% and 22% for Samples 1 and 2, respectively.

**Table 2**

| **Filament Sample No.** | **Sol Pressure (psi) (Pa)** | **Die Air (cfm) (liter/min)** | **Green Diameter (µm)** | **Fired Diameter (µm)** |
|---|---|---|---|---|
| 1 | 5 (34) | 15 (7) | 2.2 | 1.4 |
| 2 | 11 (76) | 15 (7) | 2.6 | 1.9 |

Filaments were fired in a continuous kiln, heating over 54 minutes to 1285 °C with flowing steam and air. The filaments remained flexible and feel soft to the touch. As shown in Table 2 above, SEM microscopy found that the filaments were 1.4 µm and 1.9 µm in diameter for Samples 1 and 2, respectively. As expected, fired filament diameter shrank to approximately 70% of the green filament diameter, as shrinkage results from the evaporation of volatiles and elimination of porosity. The filaments were many centimeters long, perhaps even tens or hundreds of centimeters in length, and some filaments were essentially continuous. Filament diameter was uniform down their length, and the relative standard deviation of diameter between filaments was 20%. There was no shot, and the filament surfaces were relatively smooth.

The mullite content of the Sample 1 filaments after 1285 °C firing as measured by powder XRD was 2%. This test compares mullite XRD peak height (26° 2Θ) to a reference sample heated to 1500 °C for 1 hr. After heating to 1330 °C, the mullite content increased to 14%.

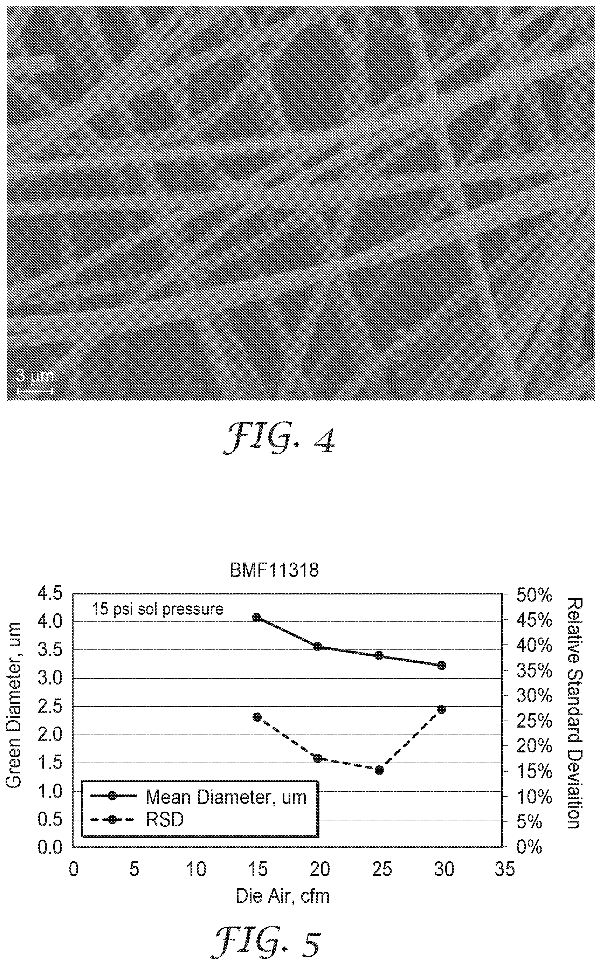

A SEM photograph at 5000X of the mat made using the filaments of Sample 2 is shown in FIG. 4.

### Example 2 (not according to the invention)

An ACH-silica sol with composition 76% Al₂O₃-24% SiO₂ and 10 wt% PVA relative to Al₂O₃ was prepared. After dilution, the viscosity of the 76:24 sol was 9,800 cP (9.8 Pa-sec).

The sol was blown using a BMF die with fifty holes as in Example 1, except that the holes had a diameter of 15 mils (0.38 mm). The die gap was 30 mil (0.76 mm) and standoff was +20 mil (0.50 mm). The sol was pressurized to 0.4 psi (3 Pa).

Filaments collected on the vacuum screen were uniform and dry. At 6.5 cfm (0.003 m³/sec) die air, the green filament diameter was 5.3 µm. When air was increased to 9 cfm (0.004 m³/sec), the diameter was reduced to 3.7 µm. The relative standard deviation of diameter was 7% and 14% for the two samples, respectively. At 70% of green diameter, the fired diameter would be expected to be 2.6 µm. This example illustrates that large, 15 mil holes can be used to make BMF filaments, but the larger diameters were not preferred.

Tensile strength of the nonwoven mats in Example 2 was measured using a tensile tester (Instron, Inc). Webs with 270 g/m² basis weight were cut to 7/8 inch (22.2 mm) width and 3 inch (76.2 mm) length, gripped using rubber-faced grips at 20 psi (146 Pa) grip pressure at 1 inch (25.4 mm) gauge length, and loaded to failure at 0.5 inch (12.7mm)/minute. The thickness of the mats was measured with a TMI tester so that strength could be calculated. Mats fired at 1285 °C had tensile strength over 200 psi (1460 Pa). Webs fired to 1330 °C with 65% mullite had tensile strength up to 60 psi (410 Pa).

The detailed results are shown in Table 3 below.

**Table 3**

| **Mat** | **Firing Temp (°C) Mullite (wt%)** | **Mat width (inch) (mm)** | **Mat thickness (inch) (mm)** | **Mat Basis weight (g/m2)** | **Mat compressed density (g/cc)** | **Breaking load (pounds) (kg)** | **Strength (psi) (Pa)** |
|---|---|---|---|---|---|---|---|
| 1 | 1285 °C, 2% mullite | 0.875 (22.2) | 0.066 (1.68) | 325 | 0.19 | 11.6 (5.3) | 201 (1390) |
| 2 | 1285 °C, 2% mullite | 1 (25.4) | 0.0435 (1.10) | 284 | 0.26 | 11.1 (5.0) | 255 (1760) |
| 3 | 1330 °C, 65% mullite | 1.25 (31.8) | 0.075 (1.91) | 366 | 0.19 | 5.6 (2.6) | 60 (410) |
| 4 | 1330 °C, 65% mullite | 1.375 (34.9) | 0.04 (1.02) | 174 | 0.17 | 2.06 (0.94) | 37 (255) |

The ability of mats in Example 2 to withstand repeated flexure was determined using a Flexural endurance Tester (Tinnius Olsen Testing Machine Co, Inc.) Testing conformed to ASTM D2176, and consists of folding the mats at 30-60 cycles per minute over 270 degrees of arc. One cycle is a double fold, bending the mat 135 degrees one direction, then 135 degrees in the other direction. The machine also puts a 100 gram load on the sample using a pulley and dead load arrangement. The gauge length of the mat in the tester was 1.5". The mats were gripped in a steel fixture with a 70 mil wide gap which has a sharp edge with 45 degree tapers. This bending over a sharp edge provides a severe test for a ceramic material.

Mats with greater than 60% mullite had flex endurance of 18-140 double cycles under 100g load, and endured more than 2000 cycles at zero tensile load without breaking. The results are shown in Table 4 below.

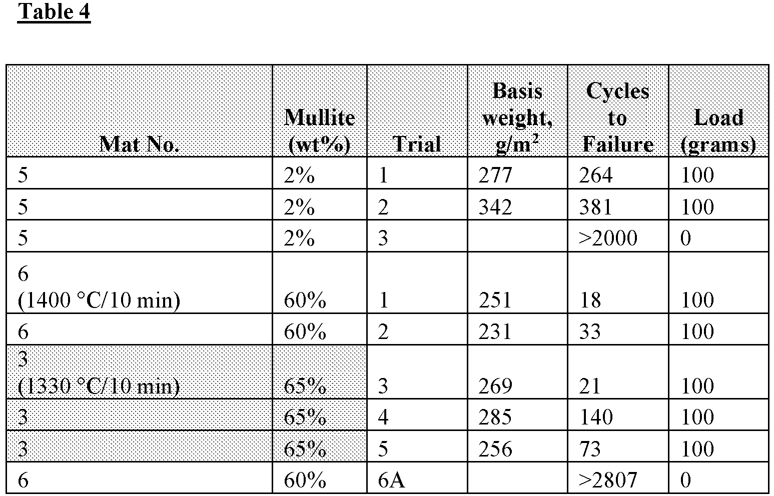

### Example 3A

Filaments were spun with a 6 mil (0.15 mm) die as in Example 1, with die air flow from 15 cfm (7 liter/min) to 30 cfm (14 liter/min). As air flow increased, diameter decreased from 4.1 µm down to 3.1 µm, consistent with the increased stretching force from the die air.

When sol pressure was reduced to 7 psi (48 Pa), the filament diameter was reduced to 2.1 µm (equivalent to 1.4 µm fired). Based on weight collected, the flow rate of filament collected was reduced from 0.19 g/hole/min to 0.05 g/hole/min. The demonstrates that reducing sol pressure and flow per hole can reduce filament diameter. Relative standard deviation was less than 30% for all conditions.

The results are shown in Table 5 below, and the results are plotted in FIG. 5 for samples 3-6 at 15 psi (103 Pa) sol pressure with die air flow rates increasing from 15-30 cfm (7 liter/min to 14 liter/min).

**Table 5**

| **Filament Sample** | **3** | **4** | **5** | **6** | **7** |
|---|---|---|---|---|---|
| **Sol Pressure (psi) (Pa)** | 15 (103) | 15 (103) | 15 (103) | 15 (103) | 7 (48) |
| **Die Air (cfm) (liter/min)** | 15 (7) | 20 (9) | 25 (11) | 30 (14) | 20 (9) |
| **Mean Green Filament Diameter (µm)** | 4.1 | 3.6 | 3.4 | 3.2 | 2.1 |
| **Standard Deviation** | 1.04 | 0.62 | 0.52 | 0.87 | 0.38 |
| **RSD (%)** | 25.4 | 17.3 | 15.2 | 27.0 | 17.7 |

### Example 3B

Filament mats with a web basis weight of about 200 g/m² made from the filaments of samples 3 and 7 were fired to 1300 °C as in Example Sample 3 is not according to the invention. Filament diameter after firing was 63% and 71% of green (unfired) diameter for the two filaments, respectively. The results are shown in Table 6 below. Higher air flow rate and velocity reduces filament diameter.

**Table 6**

| **Filament Sample** | **3** | **7** |
|---|---|---|
| **Sol Feed Rate (g/hole/min)** | 0.019 | 0.005 |
| **Die Air (cfm) (liter/min)** | 15 (7) | 20 (9) |
| **Mean Diameter Fired (µm)** | 2.6 | 1.5 |
| **Standard Deviation** | 0.91 | 0.28 |
| **RSD (%)** | 34.7 | 18.4 |

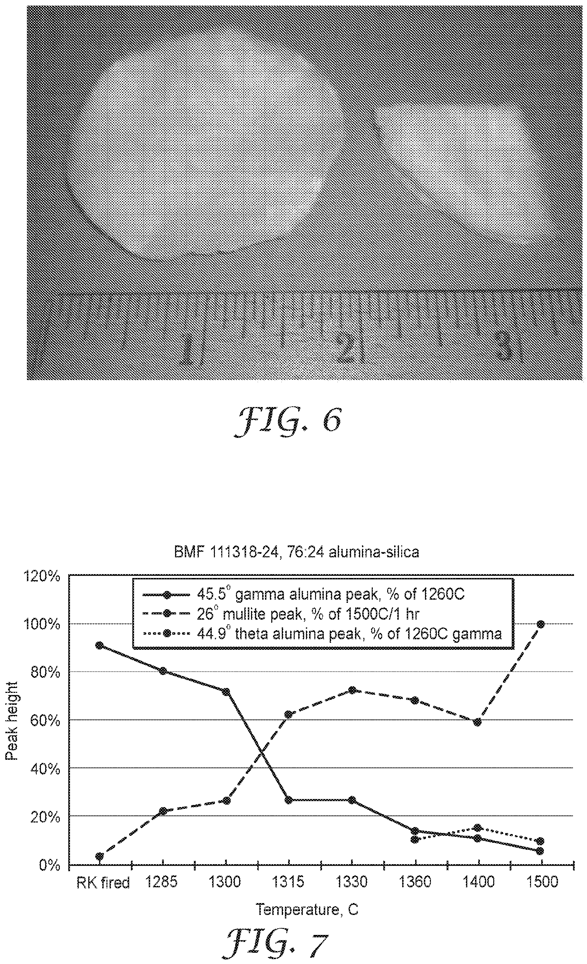

The mullite content of Sample 7 after firing to 1300 °C was 3%, and after firing to 1330 °C, 72%. A picture of the 1330 °C-fired mat is shown in FIG. 6. The mat or web at the right in FIG. 6 was folded over twice. The mat could be folded and unfolded without visible damage, which demonstrates the flexibility and soft feel of this small diameter mat.

The graph in FIG. 7 shows the development of crystalline mullite as a function of heat treatment temperature for Sample 7. The mullite content increases from about 2% to greater than about 50% above 1315 °C. Simultaneously, the content of γ-Al₂O₃ decreases to 25% relative to the height of the 2Θ = 67° peak at 1285 °C. A third phase, Θ-Al₂O₃, appears at 1360 °C and above. The presence of the transition aluminas γ-Al₂O₃ and Θ-Al₂O₃ indicate that the 76% composition, which is higher than the 72% Al₂O₃ of 3Al₂O_{3:}2SiO₂ mullite, creates metastable alumina phases at very high temperatures where one would expect to find α-Al₂O₃.

### Example 4 (not according to the invention)

An ACH-silica sol with composition 76% Al₂O₃-24% SiO₂ and 10 wt% PVA relative to Al₂O₃ was prepared at 2,000 cP (2 Pa-sec). The sol was blown using a BMF die with eighty 6 mil (0.15 mm) holes as in Example 1. Die tip setback was -0.02 inch (0.50 mm), and the die gap was 0.03 inch (0.76 mm). The sol was pressurized to 6 psi (41 Pa). Below 10 cfm (5 liter/min) die air, fiberization was poor, and sol dripped from many of the holes in the die. With the die at 13 cfm (6 liter/min), filaments were uniform and dry.

With 6 psi (41 Pa) sol pressure, the green filament diameter was 3.1 µm and the collection rate was 1.3 g/minute. When the sol pressure was decreased to 3 psi (21 Pa), the green filament diameter was reduced to 2.9 µm (equivalent to 2.0 µm fired). The RSD was 19% and 32%, respectively.

### Example 5 (not according to the invention)

An ACH-silica sol with composition 76% Al₂O₃-24% SiO₂ and 10wt% PVA relative to Al₂O₃ was prepared at 4,000 cP (4 Pa-sec). The sol was blown using a BMF die with eighty 6 mil (0.15 mm) holes as in Example 1. Die tip setback was -0.02 inch (0.50 mm), and the die gap was 0.03 inch (0.76 mm). The sol was pressurized to 12.5 psi (86 Pa). Filaments were blown with 25 cfm (12 liter/min) die air.

The resulting filaments were uniform and dry. The green filament diameter was 3.8 µm with a RSD of 17%, and after firing, diameter was 3.3 µm with a measured RSD of 28%. The filaments were collected at 2.35 g/minute or 0.29 g/hole/min. A flexible, soft, non-woven mat with web basis weight of 250 g/m² was produced.

After firing to 1285 °C and 1330 °C, the mullite content was 2 wt% and 58 wt%, respectively. The mat was flexible after both firing conditions.

Reference throughout this specification to "one embodiment," "certain embodiments," "one or more embodiments" or "an embodiment," whether or not including the term "exemplary" preceding the term "embodiment," means that a particular feature, structure, material, or characteristic described in connection with the embodiment is included in at least one embodiment of the certain exemplary embodiments of the present disclosure. Thus, the appearances of the phrases such as "in one or more embodiments," "in certain embodiments," "in one embodiment" or "in an embodiment" in various places throughout this specification are not necessarily referring to the same embodiment of the certain exemplary embodiments of the present disclosure. Furthermore, the particular features, structures, materials, or characteristics may be combined in any suitable manner in one or more embodiments.

While the specification has described in detail certain exemplary embodiments, it will be appreciated that those skilled in the art, upon attaining an understanding of the foregoing, may readily conceive of alterations to, variations of, and equivalents to these embodiments. Accordingly, it should be understood that this disclosure is not to be unduly limited to the illustrative embodiments set forth hereinabove. In particular, as used herein, the recitation of numerical ranges by endpoints is intended to include all numbers subsumed within that range (e.g., 1 to 5 includes 1, 1.5, 2, 2.75, 3, 3.80, 4, and 5). In addition, all numbers used herein are assumed to be modified by the term "about."

## Claims

1. A nonwoven article comprising a plurality of polycrystalline, aluminosilicate ceramic filaments entangled to form a cohesive nonwoven mat, wherein each of the aluminosilicate ceramic filaments in the mat have an average diameter of less than 2 microns (µm), and wherein the aluminosilicate ceramic filaments comprise an average of about 15 wt% to about 80 wt% crystalline mullite, as measured according to the Mullite Content Measurement Procedure set out in the Examples section of the description.

2. The nonwoven article of claim 1, wherein the aluminosilicate ceramic filaments comprise about 50 wt% to about 80 wt% crystalline mullite.

3. The nonwoven article of claims 1 or 2, wherein the nonwoven mat further comprises fibers selected from the group consisting of alumina fibers, silica fibers, silicon carbide fibers, silicon nitride fibers, carbon fibers, glass fibers, metal fibers, alumina-phosphorous pentoxide fibers, alumina-boria-silica fibers, zirconia fibers, zirconia-alumina fibers, zirconia-silica fibers, non-fibrous material selected from the group consisting of aerogels and glass bubbles, and mixtures or combinations of the foregoing.

4. The nonwoven article of any one of claims 1 to 3, wherein the plurality of polycrystalline, aluminosilicate ceramic filaments have an alumina to silica ratio in the range of 60:40 to 90: 10 by weight.

5. The nonwoven article of any one of claims 1 to 4, wherein the plurality of polycrystalline, aluminosilicate ceramic filaments comprise about 73% to about 80% alumina.

6. The nonwoven article of any one of claims 1 to 5, wherein the nonwoven mat further comprises a binder to bond together the plurality of polycrystalline, aluminosilicate ceramic filaments.

7. A nonwoven article of any one of claims 1 to 6, wherein the article is selected from the group consisting of a filtration article, a thermal insulation article, an acoustic insulation article, a fire protection article, a mounting mat for a vehicle component, a gasket, a catalyst support, and combinations thereof.

8. A method of making a nonwoven web, the method comprising:
flowing an aqueous ceramic precursor sol through at least one orifice to produce at least one substantially continuous filament, wherein the aqueous ceramic precursor sol comprises silica particles, water, and a hydrolysable aluminum-containing compound;
attenuating the filaments with a high velocity air stream to draw the filaments to an average diameter not less than or equal to 10 micrometers (µm);
removing at least a portion of the water from the at least one substantially continuous filament to at least partially dry the at least one substantially continuous filament;
collecting the at least partially dried filaments as a green nonwoven web on a collector surface; and
heating the green nonwoven web at a temperature and for a time sufficient to convert the green nonwoven web to a cohesive mat comprised of at least one polycrystalline, aluminosilicate ceramic filament comprising about 15 wt% to about 80 wt% crystalline mullite, as measured according to the Mullite Content Measurement Procedure set out in the Examples section of the description, wherein each of the aluminosilicate ceramic filaments in the cohesive mat has an average diameter of less than 2 microns (µm).

9. The method of claim 8, further comprising directing a stream of gas proximate the at least one substantially continuous filament to at least partially dry the at least one substantially continuous filament, optionally wherein the stream of gas is heated.

10. The method of any one of claims 8 or 9, wherein the aqueous ceramic precursor sol comprises aluminum chlorohydrate, silica and polyvinyl alcohol (PVA).

11. The method of claim 10, wherein the aqueous ceramic precursor sol further comprises a defoamer.

12. The method of any one of claims 8 to 11, wherein the plurality of polycrystalline, aluminosilicate ceramic filaments have an alumina to silica ratio in the range of 60:40 to 90:10 by weight.

13. The method of claim 12, wherein the plurality of polycrystalline, aluminosilicate ceramic filaments comprise about 73% to about 80% alumina.

14. The method of any one of claims 8 to 13, wherein aqueous ceramic precursor sol comprises about 10% PVA per weight of alumina.

15. The method of any one of claims 8 to 14, wherein the at least one polycrystalline, aluminosilicate ceramic filament comprises at least 50 wt% crystalline mullite.

## Patentansprüche

1. Ein Vliesgegenstand, aufweisend eine Mehrzahl von polykristallinen Aluminosilikatkeramikfilamenten, die verschlungen sind, um eine zusammenhängende Vliesmatte zu bilden, wobei jedes der Aluminosilikatkeramikfilamente in der Matte einen durchschnittlichen Durchmesser von weniger als 2 Mikrometer (µm) aufweist, und wobei die Aluminosilikatkeramikfilamente einen Durchschnitt von etwa 15 Gew.-% bis etwa 80 Gew.-% kristallinen Mullit aufweisen, wie gemäß dem Mullitgehaltmessvorgehen gemessen, das in dem Abschnitt Beispiele der Beschreibung dargelegt ist.

2. Der Vliesgegenstand nach Anspruch 1, wobei die Aluminosilikatkeramikfilamente etwa 50 Gew.-% bis etwa 80 Gew.-% kristallinen Mullit aufweisen.

3. Der Vliesgegenstand nach Anspruch 1 oder 2, wobei die Vliesmatte ferner Fasern aufweist, die aus der Gruppe ausgewählt sind, bestehend aus Aluminiumoxidfasern, Siliciumdioxidfasern, Siliciumcarbidfasern, Siliciumnitridfasern, Kohlefasern, Glasfasern, Metallfasern, Aluminiumoxidphosphorpentoxidfasern, Aluminiumoxidborsiliciumdioxidfasern, Zirkonoxidfasern, Zirkonoxidaluminiumoxidfasern, Zirkonoxidsiliciumdioxidfasern, nichtfaserigem Material, das aus der Gruppe ausgewählt ist, bestehend aus Aerogelen und Glasblasen und Mischungen oder Kombinationen der vorgenannten.

4. Der Vliesgegenstand nach einem der Ansprüche 1 bis 3, wobei die Mehrzahl von polykristallinen Alum inosilikatkeram ikfilamenten ein Verhältnis von Aluminiumoxid zu Siliciumdioxid im Bereich von 60 : 40 bis 90 : 10 nach Gewicht aufweist.

5. Der Vliesgegenstand nach einem der Ansprüche 1 bis 4, wobei die Mehrzahl von polykristallinen Aluminosilikatkeramikfilamenten etwa 73 % bis etwa 80 % Aluminiumoxid aufweisen.

6. Der Vliesgegenstand nach einem der Ansprüche 1 bis 5, wobei die Vliesmatte ferner ein Bindemittel aufweist, um die Mehrzahl von polykristallinen Aluminosilikatkeramikfilamenten miteinander zu verbinden.

7. Ein Vliesgegenstand nach einem der Ansprüche 1 bis 6, wobei der Gegenstand aus der Gruppe ausgewählt ist, bestehend aus einem Filtrationsgegenstand, einem Gegenstand für thermische Isolierung, einem Gegenstand für akustische Isolierung, einem Brandschutzgegenstand, einer Befestigungsmatte für einen Fahrzeugbestandteil, einer Dichtung, einem Katalysatorträger und Kombinationen davon.

8. Ein Verfahren zum Herstellen einer Vliesbahn, das Verfahren aufweisend:
Fließen eines wässrigen Keramikvorläufersols durch mindestens eine Öffnung, um mindestens ein im Wesentlichen kontinuierliches Filament zu produzieren, wobei das wässrige Keramikvorläufersol Siliciumdioxidteilchen, Wasser und eine hydrolysierbare aluminium haltige Verbindung aufweist;
Verfeinern der Filamente mit einem Hochgeschwindigkeitsluftstrom, um die Filamente auf einen durchschnittlichen Durchmesser von nicht weniger als oder gleich 10 Mikrometer (µm) zu ziehen;
Entfernen mindestens eines Abschnitts des Wassers aus dem mindestens einen im Wesentlichen kontinuierlichen Filament, um das mindestens eine im Wesentlichen kontinuierliche Filament mindestens teilweise zu trocknen;
Sammeln der mindestens teilweise getrockneten Filam ente als eine grüne Vliesbahn auf einer Sammeloberfläche; und
Erwärmen der grünen Vliesbahn bei einer Temperatur und für eine Zeit, die ausreicht, um die grüne Vliesbahn in eine zusammenhängende Matte umzuwandeln, die aus mindestens einem polykristallinen Aluminosilikatkeramikfilament besteht, aufweisend etwa 15 Gew.-% bis etwa 80 Gew.-% kristallinen Mullit, wie gemäß dem Mullitgehaltmessvorgehen gemessen, das in dem Abschnitt Beispiele der Beschreibung dargelegt ist, wobei jedes der Aluminosilikatkeramikfilamente in der zusammenhängenden Matte einen durchschnittlichen Durchmesser von weniger als 2 Mikrometer (µm) aufweist.

9. Das Verfahren nach Anspruch 8, ferner aufweisend ein Leiten eines Gasstroms nahe dem mindestens einen im Wesentlichen kontinuierlichen Filament, um das mindestens eine im Wesentlichen kontinuierliche Filament mindestens teilweise zu trocknen, optional wobei der Gasstrom erwärmt wird.

10. Das Verfahren nach einem der Ansprüche 8 oder 9, wobei das wässrige Keramikvorläufersol Aluminiumchlorhydrat, Siliciumdioxid und Polyvinylalkohol (PVA) aufweist.

11. Das Verfahren nach Anspruch 10, wobei das wässrige Keramikvorläufersol ferner einen Entschäumer aufweist.

12. Das Verfahren nach einem der Ansprüche 8 bis 11, wobei die Mehrzahl von polykristallinen Aluminosilikatkeramikfilamenten ein Verhältnis von Aluminiumoxid zu Siliciumdioxid im Bereich von 60 : 40 bis 90 : 10 nach Gewicht aufweisen.

13. Das Verfahren nach Anspruch 12, wobei die Mehrzahl von polykristallinen Aluminosilikatkeramikfilamenten etwa 73 % bis etwa 80 % Aluminiumoxid aufweisen.

14. Das Verfahren nach einem der Ansprüche 8 bis 13, wobei wässriges Keramikvorläufersol etwa 10 % PVA pro Gewicht des Aluminiumoxids aufweist.

15. Das Verfahren nach einem der Ansprüche 8 bis 14, wobei das mindestens eine polykristalline Aluminosilikatkeramikfilament zu mindestens 50 Gew.-% kristallinen Mullit aufweist.

## Revendications

1. Article non tissé comprenant une pluralité de filaments céramiques polycristallins d'aluminosilicate enchevêtrés pour former un mat non tissé cohésif, chacun des filaments céramiques d'aluminosilicate dans le mat ayant un diamètre moyen inférieur à 2 micromètres (µm), et les filaments céramiques d'aluminosilicate comprenant une moyenne d'environ 15 % en poids à environ 80 % en poids de mullite cristalline, comme mesuré selon la Procédure de mesure de teneur en mullite indiquée dans la section Exemples de la description.

2. Article non tissé selon la revendication 1, dans lequel les filaments céramiques d'alum inosilicate comprennent d'environ 50 % en poids à environ 80 % en poids de mullite cristalline.

3. Article non tissé selon les revendications 1 ou 2, dans lequel le mat non tissé comprend en outre des fibres choisies dans le groupe constitué par fibres d'alumine, fibres de silice, fibres de carbure de silicium, fibres de nitrure de silicium, fibres de carbone, fibres de verre, fibres métalliques, fibres d'alumine-pentoxyde phosphoreux, fibres d'alumine-oxyde de bore-silice, fibres de zircone, fibres de zircone-alumine, fibres de zircone-silice, matériau non fibreux choisi dans le groupe constitué par aérogels et bulles de verre, et mélanges ou combinaisons de ce qui précède.

4. Article non tissé selon l'une quelconque des revendications 1 à 3, dans lequel la pluralité de filaments céramiques polycristallins d'aluminosilicate ont un rapport de l'alumine à la silice dans la plage de 60:40 à 90:10 en poids.

5. Article non tissé selon l'une quelconque des revendications 1 à 4, dans lequel la pluralité de filaments céramiques polycristallins d'aluminosilicate comprennent environ 73 % à environ 80 % d'alumine.

6. Article non tissé selon l'une quelconque des revendications 1 à 5, dans lequel le mat non tissé comprend en outre un liant pour lier ensemble la pluralité de filaments céramiques polycristallins d'aluminosilicate.

7. Article non tissé selon l'une quelconque des revendications 1 à 6, l'article étant choisi dans le groupe constitué par un article de filtration, un article d'isolation thermique, un article d'isolation acoustique, un article de protection incendie, un mat de montage pour un composant de véhicule, un joint d'étanchéité, un support de catalyseur, et des combinaisons de ceux-ci.

8. Procédé de fabrication d'une nappe non tissée, le procédé comprenant :
l'écoulement d'un sol aqueux de précurseur de céramique à travers au moins un orifice pour produire au moins un filament sensiblement continu, le sol aqueux de précurseur de céramique comprenant des particules de silice, de l'eau, et un composé hydrolysable contenant de l'aluminium ;
l'atténuation des filaments avec un courant d'air à grande vitesse pour étirer les filaments jusqu'à un diamètre moyen pas inférieur à ou égal à 10 micromètres (µm) ;
l'élimination d'au moins une partie de l'eau de l'au moins un filament sensiblement continu pour sécher au moins partiellement l'au moins un filament sensiblement continu ;
la collecte des filaments au moins partiellement séchés en tant que nappe non tissée verte sur une surface collectrice ; et
le chauffage de la nappe non tissée verte à une température et pendant une période qui suffisent pour convertir la nappe non tissée verte en un mat cohésif constitué d'au moins un filament céramique polycristallin d'aluminosilicate comprenant environ 15 % en poids à environ 80 % en poids de mullite cristalline, comme mesuré selon la Procédure de mesure de teneur en mullite indiquée dans la section Exemples de la description, chacun des filaments céramiques d'aluminosilicate dans le mat cohésif ayant un diamètre moyen inférieur à 2 micromètres (µm).

9. Procédé selon la revendication 8, comprenant en outre le fait de diriger un courant de gaz à proximité de l'au moins un filament sensiblement continu pour sécher au moins partiellement l'au moins un filament sensiblement continu, facultativement le courant de gaz étant chauffé.

10. Procédé selon l'une quelconque des revendications 8 ou 9, dans lequel le sol aqueux de précurseur de céramique comprend chlorhydrate d'aluminium, silice et alcool polyvinylique (PVA).

11. Procédé selon la revendication 10, dans lequel le sol aqueux de précurseur de céramique comprend en outre un antimousse.

12. Procédé selon l'une quelconque des revendications 8 à 11, dans lequel la pluralité de filaments céramiques polycristallins d'aluminosilicate ont un rapport de l'alumine à la silice dans la plage de 60:40 à 90:10 en poids.

13. Procédé selon la revendication 12, dans lequel la pluralité de filaments céramiques polycristallins d'aluminosilicate comprennent environ 73 % à environ 80 % d'alumine.

14. Procédé selon l'une quelconque des revendications 8 à 13, dans lequel le sol aqueux de précurseur de céramique comprend environ 10 % de PVA par poids d'alumine.

15. Procédé selon l'une quelconque des revendications 8 à 14, dans lequel l'au moins un filament céramique polycristallin d'aluminosilicate comprend au moins 50 % en poids de mullite cristalline.
